# EUROPEAN PATENT APPLICATION

(11) **EP 0 957 431 A1**
(43) Date of publication of application: **17.11.1999**
(21) Application number: 98440092.9
(22) Date of filing: 11.05.1998
(51) Int. Cl.: G06F 11/26

(54) **Processor system and method for testing a processor system**

(71) Applicant: ALCATEL, 75088 Paris (FR)
(72) Inventor: Pfirsch, Thierry, 67370 Woellenheim (FR)
(74) Representative: Schätzle, Albin, Dipl.-Phys.

(57) **Abstract**

By providing the internal bus (14,54) of a processor system (1,41) comprising a processor (2,42) and peripherals (3-7,43-47) with an external bus in/output (15,55), two substantially identical processor systems (41,1) can be coupled via their internal buses for testing and/or debugging purposes, which firstly allows the testing and/or debugging of complicated processor systems due to all in/outputs of both systems no longer needing to be coupled, and secondly prevents the necessity of specifically designing an additional processor system for testing and/or debugging purposes only.

## Description

The invention relates to a processor system comprising at least one processor and at least one peripheral and at least one internal bus coupled to said processor via a first internal bus in/output and to said peripheral via a second internal bus in/output.

Such a processor system is of common general knowledge. Said processor and said peripheral are coupled to processor system in/outputs for external communication and are coupled via said bus for internal communication.

The processor system is disadvantageous, inter alia, because of, for example for testing and/or debugging purposes, in/outputs of a first processor system must be coupled to in/outputs of a second processor system to have the same behavior at the two processor system, which second processor system needs to be designed specifically for these testing purposes.

It is an object of the invention, inter alia, to provide a processor system as defined in the preamble which is better suited for testing purposes.

Thereto, the processor system according to the invention is characterised in that said internal bus comprises an external bus in/output for coupling said processor system with a further processor system.

By coupling the processor system with the further processor system via the internal bus of said processor system, firstly it is no longer necessary to couple in/outputs of both systems, and secondly (by using enable/disable possibilities) the further processor system does not have to be designed specifically for the testing purposes, large parts of it could correspond with said processor system.

The invention is based on the insight, inter alia, that internal communication and external communication do not have to be completely separated from each other, but may (partially) coincide.

The invention solves the problem, inter alia, of providing a processor system which is better suited for testing purposes.

A first embodiment of the processor system according to the invention is characterised in that said processor system comprises a board, with said processor and said peripheral and said internal bus being situated on said board, possibly in an embedded way.

Especially processor systems being situated on boards (possibly in an embedded way) are difficult to test and/or to be debugged, due to the ever increasing complexity of these possibly embedded systems.

A second embodiment of the processor system according to the invention is characterised in that said processor system comprises logical gates being situated between, on the one hand, processor and/or peripheral, and, on the other hand, processor system in/outputs.

By using these logical gates, buffers are created between, on the one hand, processor and peripheral, and, on the other hand, other external systems.

A third embodiment of the processor system according to the invention is characterised in that at least one logical gate comprises a control input for receiving a control signal.

By controlling logical gates, separated parts of said processor system become separately testable.

A fourth embodiment of the processor system according to the invention is characterised in that said further processor system comprises a further processor and at least one further peripheral and at least one further internal bus comprising a further external bus in/output to be coupled with said external bus in/output for testing purposes.

A fifth embodiment of the processor system according to the invention is characterised in that said further processor system comprises a further board, with said further processor and said further peripheral and said further internal bus being situated on said further board.

A sixth embodiment of the processor system according to the invention is characterised in that said further processor system comprises further logical gates being situated between, on the one hand, further processor and/or further peripheral, and, on the other hand, further processor system in/outputs.

A seventh embodiment of the processor system according to the invention is characterised in that at least one further logical gate comprises a further control input for receiving a further control signal.

An eighth embodiment of the processor system according to the invention is characterised in that both processor systems are at least substantially identical (or even completely identical).

It is no longer necessary to design any additional (possibly embedded) processor system specifically for testing and/or debugging purposes only, testing can be done by coupling two identical processor systems.

The invention further relates to a method for testing a processor system comprising at least one processor and at least one peripheral and at least one internal bus coupled to said processor via a first internal bus in/output and to said peripheral via a second internal bus in/output.

The method according to the invention is characterised in that said internal bus comprises an external bus in/output, said method comprising the step of coupling said processor system with a further processor system via said external bus in/output and via a further external bus in/output of said further processor system.

All references including further references cited with respect to and/or inside said references are considered to be incorporated in this patent application.

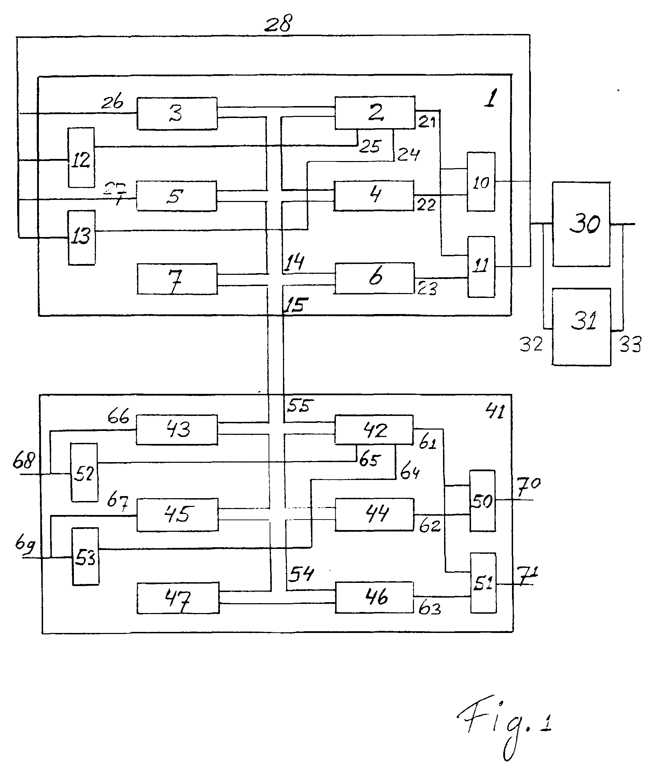

The invention will be explained in greater detail at the hand of embodiments disclosed in the drawing, whereby
figure 1 discloses a processor system according to the invention for performing a method according to the invention.

The processor system 1 according to the invention comprises a processor 2, a first peripheral 3, a second peripheral 4, a third peripheral 5, a fourth peripheral 6 and a fifth peripheral 7 which are coupled via an internal bus 14, which according to the invention is provided with an external bus in/output 15. Processor 2 is coupled via a connection 21 to logical gates 10 and 11, peripheral 4 is coupled via a connection 22 to logical gate 10, and peripheral 6 is coupled via a connection 23 to logical gate 11. Processor 2 is coupled via a connection 24 to logical gate 13 and via a connection 25 to a logical gate 12. All logical gates 10, 11, 12 and 13 are coupled via a connection 28, with peripheral 3 being coupled to connection 28 via a connection 26 and with peripheral 5 being coupled to connection 28 via a connection 27.

The further processor system 41 according to the invention comprises a processor 42, a first peripheral 43, a second peripheral 44, a third peripheral 45, a fourth peripheral 46 and a fifth peripheral 47 which are coupled via an internal bus 54, which according to the invention is provided with an external bus in/output 55 coupled to the external bus in/output 15. Processor 42 is coupled via a connection 61 to logical gates 50 and 51, peripheral 44 is coupled via a connection 62 to logical gate 50, and peripheral 46 is coupled via a connection 63 to logical gate 51. Processor 42 is coupled via a connection 64 to logical gate 53 and via a connection 65 to a logical gate 52. Logical gate 50 is coupled to a connection 70, logical gate 51 is coupled to a connection 71, logical gate 52 is coupled to a connection 68 which via a connection 66 is coupled to peripheral 43, and logical gate 53 is coupled to a connection 69 which via a connection 67 is coupled to peripheral 45.

Connection 28 is coupled to a processor 30 and to an emulator 31, which are mutually coupled at one side via a connection 32 and at the other side via a connection 33.

Each connection could be either unidirectional or bidirectional or (form part of) a bus. Each logical gate (like an OR, NOR, AND, NAND etc.) could be unidirectional or bidirectional (for example two gates being in antiparallel position). A peripheral for example comprises a Burst Mode Controller (BMC) or a Universal Asynchroneous Receiver Transmitter (UART) or a memory like a RAM or a Digital Signal Processor (DSP). Each processor system (ASIC) is for example a so-called board, with processor system 1 being a debug board and processor system 41 being a target board.

According to prior art, each internal bus 14,54 only comprises internal in/outputs coupled to processors 2,42 and to peripherals 3-7,43-47, and does not comprise said external in/output 15,55. Then, for being able to test the first processor system, the second processor system has to be designed specifically for testing purposes, and all inputs and outputs of both systems need to be coupled. Due to these processor systems (ASICs) becoming more complicated each month, this all is disadvantageous.

According to the invention, both processor systems comprise internal buses 14,54 being provided with said external in/outputs 15,55. Due to this, the second processor system can be substantially identical to the first processor system, and it is no longer necessary to couple all inputs and outputs: both processor systems communicate via the coupled internal buses 14,54, whereby for example processor 2 is enabled and processor 42 is disabled, with peripherals 3-7 being disabled and peripherals 43-47 being enabled. The enabling/disabling of processors 2,42 and or/peripherals 3-7,43-47 could be done directly via processor-inputs and/or peripheral inputs not shown in the drawing and/or could be done indirectly via the logical gates 10-13,50-53. These logical gates 10-13,50-53 could be controlled directly by for example processors 2,42 via one or more control signals flowing through the connections shown in the drawing or through further connections not shown in the drawing or could be controlled indirectly via gate-inputs not shown in the drawing for receiving such control signals.

## Claims

1. Processor system comprising at least one processor and at least one peripheral and at least one internal bus coupled to said processor via a first internal bus in/output and to said peripheral via a second internal bus in/output, characterised in that said internal bus comprises an external bus in/output for coupling said processor system with a further processor system.

2. Processor system according to claim 1, characterised in that said processor system comprises a board, with said processor and said peripheral and said internal bus being situated on said board.

3. Processor system according to claim 1 or 2, characterised in that said processor system comprises logical gates being situated between, on the one hand, processor and/or peripheral, and, on the other hand, processor system in/outputs.

4. Processor system according to claim 3, characterised in that at least one logical gate comprises a control input for receiving a control signal.

5. Processor system according to claim 1, 2, 3 or 4, characterised in that said further processor system comprises a further processor and at least one further peripheral and at least one further internal bus comprising a further external bus in/output to be coupled with said external bus in/output for testing purposes.

6. Processor system according to claim 5, characterised in that said further processor system comprises a further board, with said further processor and said further peripheral and said further internal bus being situated on said further board.

7. Processor system according to claim 5 or 6, characterised in that said further processor system comprises further logical gates being situated between, on the one hand, further processor and/or further peripheral, and, on the other hand, further processor system in/outputs.

8. Processor system according to claim 7, characterised in that at least one further logical gate comprises a further control input for receiving a further control signal.

9. Processor system according to any one of claims 1 to 8, characterised in that both processor systems are at least substantially identical.

10. Method for testing a processor system comprising at least one processor and at least one peripheral and at least one internal bus coupled to said processor via a first internal bus in/output and to said peripheral via a second internal bus in/output, characterised in that said internal bus comprises an external bus in/output, said method comprising the step of coupling said processor system with a further processor system via said external bus in/output and via a further external bus in/output of said further processor system.
